# EUROPEAN PATENT APPLICATION

(11) **EP 4 660 858 A2**
(43) Date of publication of application: **10.12.2025**
(21) Application number: 25198617.0
(22) Date of filing: 24.10.2023
(51) Int. Cl.: G06F 21/55

(54) **METHOD AND SYSTEM FOR EXECUTING A SAFETY-CRITICAL APPLICATION**

(62) Divisional of application: 23205574.9
(71) Applicant: Elektrobit Automotive GmbH, 91058 Erlangen (DE)
(72) Inventor: Armbruster, Michael, 37073 Göttingen (DE); Petersohn, Jens, 91058 Erlangen (DE); von Czettritz und Neuhaus, Michel, 37073 Göttingen (DE); Kral, Stefan, 37073 Göttingen (DE); Brinker, Thomas, 37073 Göttingen (DE); Müller, André, 37073 Göttingen (DE); Hüppelshäuser, Nicolas, 37073 Göttingen (DE); Hoch, David, 37073 Göttingen (DE); Theimert, Fabian, 37073 Göttingen (DE); Müller, Rainer, 37073 Göttingen (DE); Beer, Eike, 37073 Göttingen (DE); Hofmann, Patrick, 37073 Göttingen (DE)
(74) Representative: Aumovio Corporation

(57) **Abstract**

A method of executing a safety-critical application on a hardware platform (100) is proposed. The method includes executing, in a first execution environment (120), the safety-critical application (130); executing, in a second execution environment (140), a supervisor component (150) for the safety-critical application; detecting, by the supervisor component (150), at least a transition of a control flow between the safety-critical application (130) and other software (125, 125a, 125b) running in the first execution environment (120). The method further includes in response to detecting that the control flow is transitioning from the safety-critical application (130) to the other software (125, 125a, 125b), prohibiting, by the supervisor component (150), at least one mode of access to at least one resource (114) and/or capturing a state of at least one resource, whereas, in response to detecting that the control flow is transitioning from the other software (125, 125a, 125b) back to the safety-critical application (130), allowing access to the at least one resource (114) again and/or verifying the state.

## Description

### Technical Field

The present invention, generally, relates to the field of safety-critical applications. More specifically, the present invention relates to a method for executing a safety-critical application on a hardware platform comprising at least one processor core. Further, the present invention relates to a computing system configured to perform steps of such method, to one or more computer programs for instructing a computing system to perform steps of such method, and to a machine-readable data carrier and/or download product storing such one or more computer programs.

### Background

Safety-critical applications are usually defined or understood as software applications or programs whose failure or malfunction can at least in principle result in severe damage or harm, in particular damage or harm to one or more of machinery, equipment, human health, and environmental health. In other words, failure of a safety-critical application can cause an increase in the safety risk for human beings, machinery utilized, and/or environment involved.

Safety-critical applications can, for example, be run or executed on so-called safety-critical systems, which can include computing systems running one or more software-based safety-critical applications, as well as more complex systems involving additional components, such as one or more sensors, one or more actuators, and/or other hardware components. Exemplary safety-critical systems and corresponding applications for controlling and/or monitoring one or more components can be found in vehicles, power plant control systems, manufacturing or production control systems, chemical plant control systems, building or facility control systems, and many others.

The software used for making dedicated features of a processor of a hardware platform or computing system accessible is commonly encapsulated in a special program known as operating system kernel (also referred to as OS kernel or kernel herein). Generally, the kernel, OS kernel, and/or system kernel referred to herein may be regarded as supervisor program, which may have elevated privilege level when compared to other software components, programs or software executed on top of the kernel. The correctness of the hardware features one uses can require that the operating system kernel operates on the hardware in a correct way. Hence, correct functioning of a safety-critical application may rely or depend on correct functioning of the operating system kernel software. Also, this dependency may not only involve the software unit or kernel software, which operates the hardware feature under consideration, but may rather involve all software code, which may potentially impact the software unit under consideration, for example the entire OS kernel. With support of a single safety-related function that shall be ensured by executing a safety-critical application, this yields the common understanding that an operating system kernel in its entirety should be qualified for being used in a safety context or should be monitored.

Various standards and recommendations have been defined for safety-critical applications and systems to ensure the correct or proper functioning thereof. Usually, such standards or recommendations relate to particular use cases, and/or equipment involved. For example, ISO standard 26262 recommended by the International Organization for Standardization, ISO, relates to safety-critical or safety-related systems that include electrical and/or electronic systems and that are installed in passenger cars or road vehicles. Therein, the standards and recommendations provide a set of guidelines and/or safety measures, which should be fulfilled by a safety-critical application and corresponding system to ensure correct functioning thereof. A safety-critical application or system complying with the standard or recommendation can also be referred to as safety-qualified application or system. Software applications or computing systems not complying with such standard, for example because they handle processes or functions that are not safety critical or relevant, on the other hand, can be referred to herein as non-safety-critical applications.

For open-source software with a distributed and unspecified software development model, safety qualification is challenging and costly. However, when it comes to an open-source monolithic operating system kernel like the Linux kernel, which consists of millions of lines of code, qualification in the sense of the ISO 26262 standard, for example, can become practically infeasible, as safety qualification would typically require the whole software stack to be compliant with the requirements for the same integrity level or safety integrity level (SIL) as the safety-critical application. The term safety-integrity level or integrity level, which is also referred to herein as "safety level", may be defined as the discrete level of risk-reduction provided by a safety instrumented function or safety-critical application. So far, there is no approach or technical solution available, that shows compliance of the Linux kernel, a Linux-based kernel, or similar non-proprietary kernel software with its modules to any safety integrity level.

In many software applications and corresponding computing systems or environments, safety-critical applications can also be run or executed in parallel, sequentially, or alternately with non-safety-critical applications, or more generally can coexist with applications not fulfilling the safety level of the safety-critical applications. Alternatively, or additionally, safety-critical applications may be executed on top of a non-safety qualified OS or OS kernel. Such systems are usually referred to as mixed-criticality systems or mixed-criticality software systems. Mixed-criticality systems can be complex software-based systems, where software applications or software components of different criticality, including software of the OS, such as an OS kernel, can run on common hardware, for example one or more common processors, and the different applications are from different quality classes or safety levels, including at least one safety-critical application. This means not all of the applications in a mixed-criticality system are in adherence with the quality assurance measures as requested or recommended by standards like the ISO 26262 and with respect to the highest safety level any of the applications should comply with.

To ensure correct functioning of one or more safety-critical applications in such systems of mixed-criticality, freedom from interference between the software components differing in the quality and/or safety level associated with them should be ensured. Freedom from interference is commonly achieved by guaranteeing freedom from fault-propagation across software components of different safety levels with respect to time and space (and/or data).

For example, in order to use a non-safety-related operating system kernel for the execution of safety-related applications, mitigation mechanisms should be implemented, for example to an execution environment, in particular a non-privileged execution environment, and/or at system level to a corresponding hardware platform or computing system, such as e.g., an electric/electronic/programmable electronic system or device (E/E/PE system or device). Exemplary mitigation strategies and/or corresponding mechanisms are (a) diversified encoded processing or (b) self-checking pairs. Both approaches execute program code twice and do have a comparator that does accept the output once it is identical, e.g., per bit or to a pre-defined degree. While (a) typically duplicates the program code which is then executed on the same operating-system, (b) duplicates the electronic control-unit with its software stack and, if required due to technical analysis, even parts of its build-toolchain.

The aforementioned solutions can be accompanied with further constraints and needs. For example, coded processing often comes with restrictions to the code and with the need for specific compilers. An argumentation on independence of the elements building a self-checking pair might be difficult, e.g., if no diverse compilers for the embedded device can be found or used. In general, both approaches may require avoiding common cause failures.

### Summary

It may, therefore, be desirable to provide for an improved method and computing system of executing a safety-critical application, which overcomes or at least mitigates the aforementioned drawbacks of conventional systems.

This is achieved by the subject matter of the independent claims, wherein further embodiments are included in the dependent claims and in the following description.

Aspects of the present disclosure relate to a method for executing a safety-critical application on a hardware platform, to a computing system configured to perform steps of such method, to one or more computer programs for instructing a computing system to perform steps of such method, and to a machine-readable data carrier, and/or download product storing such one or more computer programs. **It** is emphasized that any feature, function, element, and advantage described herein with reference to one aspect of the present disclosure, equally applies to any other aspect of the present disclosure described herein.

According to an aspect of the present disclosure, there is provided a method for executing a safety-critical application on a hardware platform, the hardware platform comprising at least one processor core. The method comprises the steps of:
- executing, in a first execution environment on the hardware platform, the safety-critical application;
- executing, in a second execution environment on the hardware platform, a supervisor component for the safety-critical application;
- detecting, by the supervisor component, at least a transition of a control flow between the safety-critical application and other software running in the first execution environment; and:
- in response to detecting that the control flow is transitioning from the safety-critical application to the other software, prohibiting, by the supervisor component, at least one mode of access to at least one resource used by the safety-critical application and/or capturing a state of at least one resource used by the safety-critical application, whereas,
- in response to detecting that the control flow is transitioning from the other software back to the safety-critical application, allowing access to the at least one resource (e.g., again) and/or verifying whether the state of the at least one resource is compliant with the previously captured state, and if the state is not compliant, reporting a fault.

The features and steps of the aforementioned method synergistically interact to provide comprehensive mitigation means for ensuring freedom from fault-propagation for safety-critical systems, such as the hardware platform and/or computing system described herein. In particular, the computer-implemented method and computing system described herein can provide a mitigation measure or means, which can ensure freedom from fault-propagation from any guest operating system (OS), kernel software or part thereof, OS kernel, and/or any other non-safety-qualified process to the safety-critical application. Also, the present method and system can overcome the limitations associated with conventional mitigation measures that are based on redundancy and/or resource-duplication, as mentioned under items (a) and (b) in the background section.

Hence, the method and computing system described herein can ensure or allow for safe execution of the safety-critical application on the hardware platform, e.g., on top of any guest OS, for example including any guest OS kernel, kernel software or kernel component, and optionally including one or more non-safety-critical applications. In other words, the features and steps of the aforementioned method can synergistically interact to ensure freedom from interference (FFI) to the safety-critical application in terms of one or both space and time, and/or to reliably detect any interference. In particular, the method of the present disclosure can allow for safe execution of the safety-critical application without necessarily requiring the software components of the guest OS, such as the entire guest OS kernel, to be safety-qualified. In turn, this can allow for safe execution of the safety-critical application on various different hardware platforms, with hardware and software components that may not be safety qualified. It is emphasized that the method and computing system according to the present disclosure can be used to advantage on safety-qualified systems and/or in mixed critical systems. Hence, the present disclosure is not limited in this respect. Also, the present invention can be used to advantage in conjunction with any kernel, including safety-qualified and non-safety-qualified kernel, such as e.g., a Linux-based kernel.

The term "application" as used herein can refer to or include a software application or program. The term "application" as used herein is not necessarily limited to pure software applications, but can include software-based applications, which may optionally include one or more interfaces for receiving sensor signals from one or more sensors and/or for transmitting one or more control signals, interchangeably used herein with actuation signal, to one or more actuators, and/or other hardware components.

To improve readability without loss of generality, detailed specific technical implementations may be described herein. In particular, the present disclosure refers to an operating system architecture with a kernel. As noted above, however, the kernel, OS kernel, and/or system kernel referred to herein may be regarded as supervisor program, which may have elevated privilege level compared to other software components, programs or software executed on top of the kernel. Accordingly, for those skilled in the art, it is understood that the general concept described herein can be applied to various architectures as long as exception levels and/or privilege levels mentioned in the present disclosure can be utilized.

As mentioned above, the term "safety-critical application" is typically understood as software(-based) application or program whose failure or malfunction can at least in principle result in damage or harm, in particular damage or harm to one or more of machinery, equipment, human health, and environmental health. Safety-related applications or systems, on the other hand, may be defined or understood as comprising aspects not under the control of the respective safety-critical application or system, such as personnel operating the application or system. As the present disclosure focuses on aspects related to the software-based safety-critical application and/or the corresponding computing system, the terms safety-critical and safety-related application or system can be interchangeably or synonymously used herein. In other words, in the context of the present disclosure, the term safety-critical can include or refer to safety-related, and vice versa.

The present disclosure may refer in various instances to a processor, which may typically be realized as single-core or multi-core Central Processing Unit (CPU) having one or more cores or processor cores, which may be used to run an operating system. The present disclosure, however, is not limited in this respect, but can also e.g., be applied to multi-processor hardware that shares a memory. Accordingly, the terms processor, processor core and core can be used synonymously herein.

The hardware platform, as used herein, can refer to or include a data processing platform or processing circuitry, which may include or refer to e.g., a CPU with one or more processor cores for data processing, or which may refer to a multi-processor architecture. Any reference to a single processor or processor core can include reference to multiple processors or processor cores. Also, the present disclosure is not limited to a particular processor architecture, but rather can be applied to any type or architecture of processors, such as ARM, x86, RISC and others, including multi-processor architectures that share memory.

The hardware platform can include optional components and/or provide optional hardware resources for data processing, such as a physical memory, e.g., Random Access Memory, cache memory, and/or other components. The hardware platform may be implemented in, and/or may be part of the computing system described herein. Hence, the terms hardware platform and computing system may be interchangeably or synonymously used herein.

As used herein, an execution environment may refer to or include a computing environment with an associated configuration and/or specification in terms of hard- and/or software resources, which can be configured for performing one or more computational tasks or functions. Therein, different execution environments can at least in part be isolated or separated from one another in terms of (virtual and/or physical) hardware and their software components. Optionally, different execution environments may be communicatively and/or operatively coupled to one another, and/or to other software components in a computing system, for example based on corresponding interfaces implemented in software and/or hardware. Further optionally, different execution environments can share one or more computing resources, which is also referred to herein as resources and which can include physical and/or virtual hardware resources as well as software resources.

In an exemplary and non-limiting implementation, different execution environments can be realized in a virtual computing environment providing one or more virtual machines for the one or more execution environments. Accordingly, different execution environments can be provided in the same virtual machine or in different virtual machines, each providing a particular execution environment. For instance, at least one of or both the first and second execution environments can be executed or provided in at least one virtual machine.

Generally, different execution environments can have the same privilege level or can have different privilege levels with respect to the overall computing system or hardware platform. As commonly understood, different privilege levels may define different sets of permissions or actions allowed to be performed by the respective component, wherein a higher privilege level includes more permissions when compared to a lower privilege level.

The first and second execution environments can refer to or denote different execution environments, which may differ in their configuration and/or specification. In particular, the first and second execution environments can denote independent computing environments having at least partly different hard- and/or software resources associated therewith. The first and second execution environments can be at least partly isolated from one another, allowing to independently run or execute one or more software components or programs, such as the safety-critical application in the first execution environment and the supervisor component in the second execution environment.

Optionally, at least one of the execution environments can be provided as virtual machine in a virtualization environment of the hardware platform. For example, the first execution environment and/or second execution environment can be provided by a first and/or second virtual machine, in which the safety-critical application, respectively the supervisor component, can be executed. Optionally, one or more further software components may be executed or run in the first and/or second execution environment, for example in user-space, and/or as guest operating system or OS kernel, for example in one or more virtual machines.

In at least the first execution environment "other software" is executed or running. As used herein, the other software can refer to or include any software code, program, and/or application being executed in the first execution environment, such as e.g., another process executed in user-space, a guest OS, and/or a guest OS kernel. The "other software" can be safety-qualified or non-safety-qualified. Optionally, also in the second and/or a further execution environment other software may be executed or running.

It should be noted that the present disclosure is not limited to two execution environments, but rather an arbitrary number of execution environments can be utilized. For example, non-safety-qualified and safety-qualified processes or applications may be executed in a plurality of different execution environments, for example to provide safety-qualified and non-safety-qualified execution environments separated from one another. Alternatively, execution environments of mixed criticality can be used, in which safety-qualified and non-safety-qualified software or applications may be executed.

The supervisor component may generally refer to or denote a supervisory software or monitoring component configured to monitor the execution environment, and/or execution of the safety-critical application in the execution environment. In other words, the term supervisor component may refer to a software component, which may implement error-detection and/or error-indication. While this definition may correspond to an established understanding in safety engineering, it may deviate from the understanding on the term supervisor software in context of operating systems as a component or program to control or schedule processes and other programs.

The supervisor component may refer to or denote a supervisory software or monitoring component configured to monitor the first execution environment and/or execution of the safety-critical application in the first execution environment. The supervisor component may be configured to monitor, determine, and/or confirm safe execution of the safety-critical application, for example based on processing information or data related to execution of the safety-critical application in the first execution environment. Such information or data may be retrieved and/or received from the first execution environment. Alternatively, or additionally, such information or data may be provided by a superior or intermediate component of the hardware platform, for example a hypervisor or hypervisor component.

The control flow generally denotes the control flow of the one or more processors and/or processor cores, which may refer to the order in which individual statements, instructions, and function calls of one or more software components or applications are executed, and/or evaluated by the at least one processor, and/or processor core of the hardware platform.

The supervisor component may be configured to detect, based on analyzing the control flow or data associated therewith, that a transition between the safety-critical application and the other software is occurring. Such transition is also referred to as context switch or context switching, which refers to the process of storing the state of a process, program, thread, and/or application, so that it can be restored and resume execution at a later point in time. By detecting a context switch with the supervisor component, the supervisor component can ensure that the safety-critical application cannot get erroneously corrupted, or at least cannot get corrupted without being detected by the supervisor component, which can then optionally allow to trigger or execute one or more countermeasures, which may also be referred to herein as handlers (synonymously used herein with handler components) and/or functional blocks.

As used herein, a context switch between the safety-critical application and the other software, for example a guest OS or program running in user-space, can include a context switch or transition of the control flow from the safety-critical application to the other software, and/or a context switch from the other software to the safety-critical application.

The supervisor component can be configured to detect whether a transition is occurring from the safety-critical application to the other software or vice versa. Accordingly, the supervisor component can be configured to detect a type or direction of transition of the control flow. Depending on the detected type or direction of the transition of the control flow, the supervisor component may be configured to perform or trigger different tasks.

For instance, in response to detecting that the control flow is transitioning from the safety-critical application to the other software, the supervisor component can be configured to prohibit at least one mode of access to at least one resource used by the safety-critical application. Prohibiting at least one mode of access can include modifying, and/or altering at least one mode of access, and/or access permissions for accessing the at least one resource.

Different modes of access or access permissions can relate to read permission to read from the at least one resource, write permission to write to the at least one resource, and execution permission to execute code in the at least one resource. Therein, the resource may refer to or include hardware-based and/or software-based resources. In particular, the at least one resource can refer to or include physical and/or virtual hardware resources, such as memory, processor register (also referred to as process register), memory register, and/or computing power.

Alternatively, or additionally to prohibiting at least one mode of access in response to detecting that the control flow is transitioning from the safety-critical application to the other software, the supervisor component may be configured to capture a state of at least one resource used by the safety-critical application. This can include storing a state information of the resource in a memory or other data storage, which can be loaded at a later time to resume execution. For instance, one or more of a content, a data content, a status, a processor register, a memory register, and a configuration of the at least one resource may be captured.

Alternatively, or additionally, in response to detecting that the control flow is transitioning from the other software back to the safety-critical application, the supervisor component may be configured to allow access to the at least one resource (e.g., again). Alternatively, or additionally, the supervisor component may be configured to verify and/or confirm whether the state of the at least one resource is compliant with the previously captured state, and if the state is not compliant, report a fault. Therein, states being compliant can mean states that are identical, match each other or correspond to each other. Reporting a fault may include providing a corresponding fault or error signal, for example indicative of differing or non-compliant states before and after a context switch. Alternatively, provision of a health or heartbeat signal may be ceased and/or stopped to indicate a fault.

By the aforementioned measures of the supervisor component during context switching in the first execution environment, it can be ensured that any fault that could potentially affect execution of the safety-critical application can be avoided or at least be detected, for example such that it can be mitigated after an erroneous context switch, which can include e.g., passivation and/or indication of the fault. Hence, safe execution of the safety-critical application can be ensured.

According to an embodiment, the at least one resource comprises memory pages used by, allocated to, and/or accessed by the safety-critical application. Alternatively, or additionally, prohibiting access and/or prohibiting at least one mode of access to these memory pages comprises prohibiting writing to these memory pages. In other words, the memory pages can be marked as and/or set to non-writable. Accordingly, the at least one mode of access prohibited by the supervisor component can relate to write access to memory pages, or in generally memory, used or accessed by the safety-critical application. Accordingly, upon detecting a context switch or transition of the control flow from the safety-critical application to another software, write access of the other software to memory pages used by the safety-critical application can be blocked, thereby ensuring that content of the memory pages cannot be altered by the other software during the context switch. Optionally, other modes of access, for example read access to the memory pages and/or execution of code, can be allowed.

According to an embodiment, prohibiting access to the memory pages used by the safety-critical application comprises prohibiting writing to these memory pages and prohibiting execution of code in these memory pages. In other words, the supervisor component may be configured to prohibit at least two modes of access upon detecting a transition of the control flow from the safety-critical application to the other software, the at least two modes including prohibiting write access and prohibiting execution of code in the memory pages used or accessed by the safety-critical application. Alternatively, or additionally, the memory pages can be marked as, and/or set to non-writable and non-executable. Hence, any alteration or modification of the memory pages, which could affect execution of the safety-critical application and/or data associated with the safety-critical application, can be reliably avoided, or prevented.

According to an embodiment, the prohibiting or allowing of access to memory pages comprises modifying a stage-2 page table tree, stage-2 PTT, maintained for the first execution environment and residing outside this first execution environment. In other words, one or more modes of access may be altered and/or modified in a stage-2 PTT maintained outside the first execution environment, for example maintained by the supervisor component and/or another component, such as e.g., a hypervisor executed on the at least one processor and/or processor core. Modifying and/or altering access to one or more page tables and/or page table trees can, for example, involve applying appropriate settings in one or more page tables, one or more stages of a page table tree and/or one or more PTTs. This can ensure proper isolation of hardware resources and freedom from interference.

Generally, a page table refers to a data structure used by a virtual memory system in a computer operating system to store the mapping between virtual memory addresses and a physical memory of the hardware platform, for example in the form of one or more page table entries in the page table and/or a page table tree. Optionally, page tables can hold and/or be associated with permission settings on memory access, and/or other settings. Page tables can further be arranged or structured as multilevel or multistage page table trees in hierarchical manner, for instance comprising at least a stage-1 page table tree (also referred to as level-1 page table), PTT, and a stage-2 PTT (also referred to as level-2 page table). In multilevel page tables, page table entries of the level-1 page table can be pointers to a level-2 page table (tree) and entries of the level-2 page table (trees) can be pointers to a level-3 page table (tree) and so on. The entries of the last level page table (tree) store actual frame information of the memory, and the level-1 page table (tree) typically contains a single-page table and the address of that table is typically stored in a Page Table Base Register, PTBR. In case of modern ARM-based processors, pointers to the PTT can be stored in Translation Table Base Registers 0 and/or 1, referred to as TTBRO and TTBR1. As mentioned above, however, the present disclosure is not limited to a particular processor architecture.

Accordingly, by modifying the stage-2 PTT when switching from the safety-critical application to other software, memory or memory pages used by the other software can be defined, which differ from memory or memory pages used by the safety-critical application. Hence, it can be reliably ensured that the other software cannot write to the memory or memory pages used by the safety-critical application. Alternatively, or additionally, when switching from the other software to the safety-critical application, the stage-2 PTT may be modified, such that the safety-critical application can access the memory or memory pages its used before the context switch and resume its execution. Hence, modifying the stage-2 PTT during a context switch can provide an effective means for memory isolation and can ensure safe execution of the safety-critical application.

It should be noted that also other stages of the PTT may be modified or changed during a context switch, in addition to or instead of the stage-2 PTT. In particular, the last stage of a PTT may be modified.

In an example, different settings for the stage-2 PTT may be implemented or configured in different software objects, wherein a first of such objects may be loaded or activated when the safety-critical application is active on the processor core, and a second of such objects may be loaded or activated when the other software is active on the processor core. The first software object may include applying a stage-2 PTT, such that the safety-critical application can (and optionally the other software cannot) read, write, and/or execute code in its memory or memory pages, whereas the second software object, may include applying a stage-2 PTT, such that one or more of reading from, writing to, and execution of code in the memory or memory pages allocated to the safety-critical application from the other software, and optionally also the safety-critical application or any other software, is prohibited.

According to an embodiment, the at least one resource comprises at least one processor register and/or one or more memory pages, which may optionally be maintained by one or more PTTs. Accordingly, in response to detecting that the control flow is transitioning from the safety-critical application to the other software, the supervisor component may prohibit at least one mode of access, for example one or more of write access, read access and permission to execute code, in the at least one processor register, and/or one or more memory pages. Alternatively, or additionally, in response to detecting that the control flow is transitioning from the other software back to the safety-critical application, the supervisor component may allow access of the safety-critical application to the processor register and/or one or more memory pages, for example to resume execution. This can allow to reliably and safely store and restore the state of the safety-critical application when a context switch occurs.

According to an embodiment, detecting a transition of the control flow comprises instructing, by the supervisor component, the processor core to: in response to receiving an instruction to perform an action that is associated with and/or related to the transition of the control flow, diverting the control flow to a handler in the supervisor component. Therein, diverting the control flow may include directing and/or providing the control flow to a handler in the supervisor component.

The handler may refer to a software component including a routine, which may be specifically associated with one or more predefined actions, and/or events associated with, and/or related to the transition of the control flow, and which may be configured to trigger a predefined response or action in response to said one or more actions and/or events occurring. Accordingly, the handler can dictate a particular response or subsequent action or step to be triggered, once one or more actions and/or events occur in the course of a context switch.

It should be noted that one handler may be responsible for and/or associated with a single action or a plurality of actions. Accordingly, the supervisor component may maintain or include one or more handlers associated with one or more actions. Also, a stepwise, stage-wise or hierarchical handling may be implemented, which may include or involve a plurality of handlers, wherein an output of one handler, for example a first or common handler, may be provided as input to a further handler.

As used herein, an instruction to perform an action that is associated with and/or related to the transition of the control flow is to be construed broadly. Such instruction can be based on or can be implemented based on various possible mechanisms. Examples of such mechanisms are exceptions or traps triggered upon access violation to the at least one resource by any software process other than the safety-critical application, and dedicated calls or hypervisor calls provided by a hypervisor upon detecting a context switch.

For example, one or more traps may be configured on the processor and/or processor core(s) to divert the control flow to the respective handler in the supervisor component and/or a hypervisor. In other words, trapping, also referred to as hardware-rooted or hardware-assisted trapping, of the at least on processor core may be used to trap and/or divert the control flow into one or more of the hypervisor, the supervisor component, and/or the respective handler. Alternatively, or additionally, one or more traps for diverting the control flow may be configured on the kernel. Generally, a trap may be considered as a condition or criterion, which when fulfilled triggers an exception, which may be detected to take further action. In other words, a trap and/or corresponding exception can cause diverting the control flow into the supervisor component and/or the respective handler. Hence, trapping can provide a reliable tool for detecting a context switch between the safety-critical application and the guest OS.

Optionally, the trapping and/or diverting of the control flow may include trigger and/or be accompanied with executing an exit of the first execution environment, for example virtual machine providing the first execution environment, which can be detected by the hypervisor and/or the supervisor component, for example based on a corresponding exit signal or status code of the first execution environment. The exit of the first execution environment, the corresponding exception, and/or trap can allow to invoke the associated functions of one or more the hypervisor, the supervisor component, and/or the respective handler.

The trapping and/or diverting of the control flow can, in an exemplary implementation, be provoked, caused, and/or triggered by applying appropriate settings in a page table tree, for example a stage-2 page table tree (PTT), optionally maintained by a hypervisor and/or the supervisor component for the first execution environment running the safety-critical application. Alternatively, or additionally, traps could be produced at least in part programmatically, for instance by Hypervisor Calls (HVC), and/or whenever the other software, e.g., a guest OS, some process in user-space (e.g., executing a system call), and/or a guest OS kernel, tries to re-write content of specific core registers (also referred to as processor or process registers) of the processor and/or memory pages (virtual and/or physical memory pages) that should be protected. An example of such memory pages are stage-2 memory management unit protected (MMU protected) pages of memory.

According to an embodiment, the executing of the safety-critical application comprises verification, determination, and/or confirmation of one or more of the following. An integrity of at least a part of a binary comprising machine-readable instructions of the safety-critical application. Accordingly, it may be ensured that binary information and/or data has not been corrupted during a context switch. Alternatively, or additionally, it may be determined whether memory elements in the page table tree, PTT, for the safety-critical application have expected sizes and/or are located at expected places. Accordingly, integrity of a paging tree, and/or memory, or memory pages used by the safety-critical application may be ensured. Alternatively, or additionally, it may be verified whether memory pages used by the safety-critical applications do not conflict with address spaces and/or memory pages of other software, such as e.g., a non-safety-critical application, a guest OS, and/or a guest OS kernel. One or more of the aforementioned measures to ensure safe execution of the safety-critical application can be performed by the supervisor component, one or more handlers thereof, and/or another component, such as e.g., a hypervisor. Further, if any of the aforementioned verifications fails, a fault may be reported. Hence, it may be reliably detected whether the safety-critical application is faulty and e.g., countermeasures should be performed, or safe execution can be positively confirmed in absence of any fault. Alternatively, or additionally, also incorrect functioning can be signaled, e.g., by providing an indication signal.

According to an embodiment, the method further comprises instructing, by the supervisor component, the processor, and/or processor core to: if the control flow is to be diverted from the first execution environment to the supervisor component due to any event, divert the control flow to a common handler in the supervisor component; distributing, by the common handler, according to a predetermined ruleset, the events to individual handler components in the supervisor component; determining, by each individual handler component, whether the event is expected or unexpected in the course of normal operation; and if the event is expected in the course of normal operation, executing a predetermined handling operation associated with the event, whereas, if the event is unexpected, reporting a fault. Accordingly, in an exemplary implementation, a chain of handlers including the common handler and one or more individual handlers, for example each related to an individual event when a context switch occurs, can be utilized. It should be noted, though, that the features and functions of the common handler and the individual handlers can be combined in a single handler component or handler.

According to an embodiment, the method further comprises in response to the safety-critical application raising a system call (also referred to as syscall) to an operating system in the first execution environment, checking whether the system call is on a list of allowed system calls, and if the system call is on this list, executing the system call, whereas, if the system call is not on this list, reporting a fault. Accordingly, an OS or guest OS may be executed in the first execution environment, for example in a first virtual machine, and the safety-critical application may perform a system call to the OS and/or its kernel software, which can trigger or cause the supervisor component to check whether the system call can be allowed or not. Hence, system calls potentially affecting or corrupting the state of the safety-critical application can be prohibited or suppressed, or at least it can be reported that such system call was executed, such that countermeasures or monitoring functions can be executed by the supervisor component to ensure safe execution of the safety-critical application. On the other hand, in case a system call is whitelisted which can mean that all handlers are in place to ensure freedom from corruption of the safety-critical application, such system call may be allowed without reporting.

The term "system call" or "system call instruction" may generally refer to an instruction for an action to be performed and/or a function to be provided by the kernel, which may result in control flow diversion and privilege transition between software components of different privilege level. For instance, one or more resources of the hardware platform and/or data can be requested by the safety-critical application in the course of its execution, and one or more corresponding system calls can be raised by the safety-critical application, requesting the kernel to provide the one or more resources and/or data. Exemplary and non-limiting system calls can read data from user-space, write data to user-space, modify a process of one or more applications, add a process or application, remove a process or application, call or execute one or more other processes or applications, and combinations thereof.

According to an embodiment, the method further comprises notifying, by an operating system on top of which the safety-critical application runs in the first execution environment, the supervisor component of intended actions by means of hypervisor calls, HVC. As mentioned above, other mechanisms may be based on trapping, e.g., hardware-rooted trapping and/or trapping on software level, for example on the safety-critical application itself, on the guest OS, another process in user-space, and/or a guest OS kernel.

According to an embodiment, the intended actions comprise one or both of starting a process and allocating memory pages to a process. In particular when setting-up a new process, for example by a guest OS, which can include a further safety-critical application or a non-safety-critical applications, the state, memory, and/or data of the safety-critical application could possibly be corrupted, for example due to the allocation of memory pages to the process that could interfere with the safety-critical application. Hence, notifying the supervisor component can, for example, allow to take appropriate preparation steps, monitoring functions, protection means, and/or countermeasures.

According to an embodiment, the first execution environment is a virtual machine that is instantiated by a hypervisor running on a higher privilege level than the virtual machine. In other words, the hardware platform or computing system may comprise a hypervisor for controlling a virtualization environment including at least one virtual machine that provides the first execution environment, in which the safety-critical application is executed, for example on top of a guest OS and/or guest OS kernel. By executing the safety-critical application on top of a guest OS in a virtual machine, which is instantiated by the hypervisor of higher privilege level, the hypervisor can be enabled to take over control of the control flow and divert the control flow to the supervisor component and/or one or more handlers thereof. In an optional implementation, the supervisor component may be part of the hypervisor.

In an exemplary embodiment, the hypervisor comprises a watchdog that is configured to be regularly triggered with heartbeat signals indicating normal operation of the safety-critical application. In other words, the safety-critical application may indicate health and/or a health status to the watchdog of the hypervisor. Therein, the watchdog may be a software-based health monitor for monitoring health of the safety-critical application. Alternatively, or additionally, also the supervisor component may indicate normal operation of the supervisor component and/or the safety-critical application to the hypervisor based on supplying one or more heartbeat signals to the hypervisor.

In response to the heartbeat signals ceasing, the hypervisor can determine that one or more of the safety-critical application and the supervisor component is faulty, and optionally can initiate remedial action to restore a working state of the safety-critical application and/or of the supervisor component. For example, heartbeat signals may be provided in predefined sequence and/or in predefined time intervals. The hypervisor may detect a fault in one or more of the safety-critical application and the supervisor component upon determining a lack of heartbeat signals from one or both of these components during a predetermined period of time.

According to an embodiment, one or both, the supervisor component and the safety-critical application can include a canary component configured to provide heartbeat signals to the watchdog or health monitor of the hypervisor. Such canary component can be implemented in software to provide heartbeat signals at predefined intervals. The canary component of the supervisor component and/or the canary component of the safety-critical application can be configured to receive health indications, and/or reported faults from the safety-critical application, and/or the supervisor component. In response to receiving a bad health indication, and/or a reported fault, the canary component of the supervisor component and/or the safety-critical application may cease to provide the heartbeat signals, thereby notifying the watchdog of the hypervisor about the bad health indication and/or reported fault.

According to an embodiment, the method further comprises processing, by the safety-critical application, measurement data acquired by at least one sensor into an actuation or control signal, and actuating at least one land, air, or sea vehicle, at least one robot, and/or any component thereof, with the actuation signal. In other words, based measurement or sensor data from one or more sensors, the safety-critical application may determine the actuation signal to actuate at least one component of a land, air, or sea vehicle, and/or at least one robot, which can be any type of robotic equipment. For instance, an output of the safety-critical application may include the actuation signal, which can actuate one or more display components in a vehicle.

A further aspect of the present disclosure relates to a computing system, which comprises a hardware platform with one or more processors, and/or processor cores, and a (physical and/or virtual) memory for data storage. The computing system is configured to perform steps of the method, as described hereinabove and hereinbelow. It is emphasized that any step, feature, function, and/or element described herein with reference to the method can be a feature, function, and/or element of the computing system, and vice versa.

Yet another aspect of the present disclosure relates to one or more computer programs, comprising machine-readable instructions that, when executed by a computing system, cause the computing system to perform steps of the method, as described hereinabove and hereinbelow, and/or cause the computing system to perform the role of the supervisor component and/or hypervisor in the context of the method, as described hereinabove and hereinbelow.

A further aspect of the present disclosure relates to a non-transitory machine-readable data carrier, and/or a download product with, and/or storing, one or more computer programs comprising machine-readable instructions that, when executed by a computing system, cause the computing system to perform steps of the method, as described hereinabove and hereinbelow, and/or cause the computing system to perform the role of the monitoring component in the context of the method, as described hereinabove and hereinbelow.

### Brief description of the drawings

These and other aspects of the invention will be apparent from and elucidated further with reference to the embodiments described by way of examples in the following description and with reference to the accompanying drawings, in which
Fig. 1 shows a flowchart illustrating an exemplary computer-implemented method of executing a safety-critical application on a hardware platform;
Fig. 2 shows a block diagram illustrating an exemplary hardware platform and method for executing a safety-critical application;
Fig. 3 shows a block diagram illustrating an exemplary hardware platform and method for executing a safety-critical application; and
Fig. 4 shows a block diagram of a supervisor component of an exemplary hardware platform and method for executing a safety-critical application.

In the figures, elements which correspond to elements already described may have the same reference numerals. Examples, embodiments or optional features, whether indicated as non-limiting or not, are not to be understood as limiting the invention as claimed.

### Detailed description of exemplary embodiments

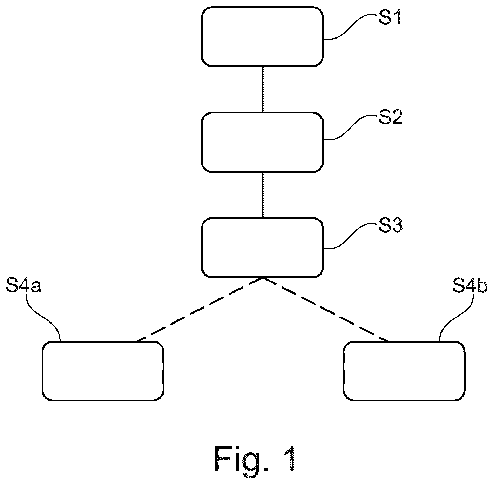

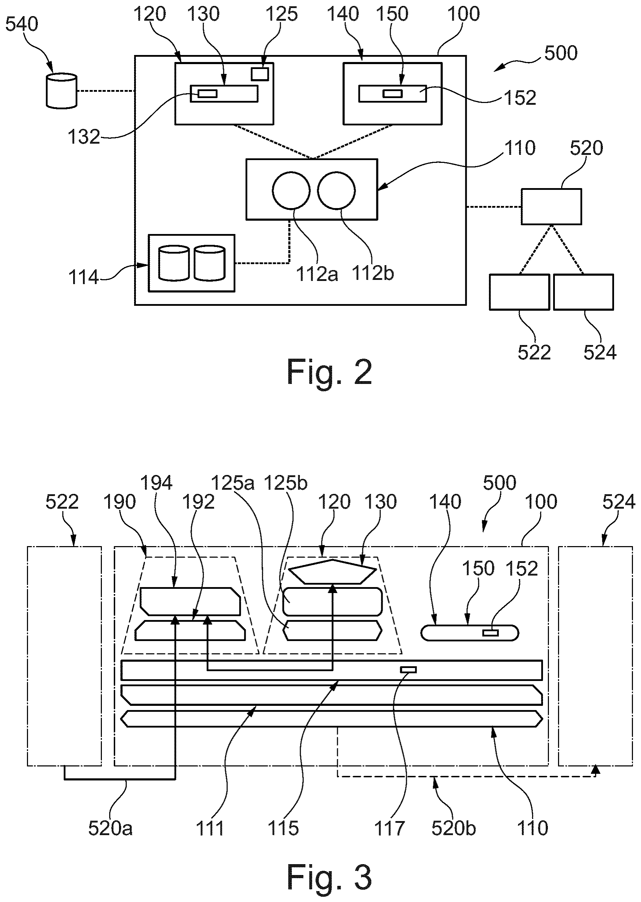

Figure 1 shows a flowchart illustrating an exemplary computer-implemented method of executing a safety-critical application on a hardware platform, for example the hardware platform 100 described with reference to Figure 2.

Figure 2 shows a block diagram illustrating an exemplary hardware platform 100, computing system 500 and method for executing a safety-critical application 130. In the following, it is mutually or commonly referred to Figures 1 and 2.

As shown in Figure 2, the hardware platform 100 includes a processing circuitry 110, which may denote a CPU 110 and/or processor 110, with two processor cores 112a, 112b. The hardware platform 100 may include a single processor 112a or more than two processor cores 112a, 112b.

The hardware platform 100 further comprises a physical data storage 114 or memory 114. The memory 114 can be any type of hardware-based memory 114, such as Random Access Memory or other type, which can be used as computing resource or resource by the processing circuitry 110.

The hardware platform 100 can be embodied as computing system 500 and/or can be part of a computing system 500, which may comprise optional other components 520, 540, such as one or more communication interfaces 520 and/or one or more other data storages 540. Via the one or more communication interfaces 520, one or more other components or entities may be communicatively and/or operatively coupled to the computing system 500, respectively, the hardware platform 100. For instance, one or more sensors 522 may be coupled to the one or more communication interfaces 520 to provide sensor signals. Alternatively, or additionally, one or more actuators 524 may be coupled to the one or more communication interfaces 520, for example to receive one or more control or actuation signals from the computing system 500 and/or hardware platform 100.

The hardware platform 100 further comprises a first execution environment 120, in which at least one safety-critical application 130 is executed and/or running. The first execution environment 120 may for example be embodied as virtual machine 120 of the hardware platform 100. The safety-critical application 130 may be executed on top of a guest operating system and/or a guest OS kernel of the guest OS. Optionally, one or more further safety-critical applications 130 may be executed in the first execution environment 120 or another execution environment of the hardware platform 100. Further optionally, one or more non-safety-critical applications may be executed in the first execution environment, for example in user-space of the guest OS, and/or one or more other execution environments. Any software possibly running in the first execution environment 120 other than the safety-critical application 130 is indicated in Figure 2 by reference numeral 125, which can include the guest OS, the guest OS kernel, one or more non-safety-critical applications and/or one or more further safety-critical applications.

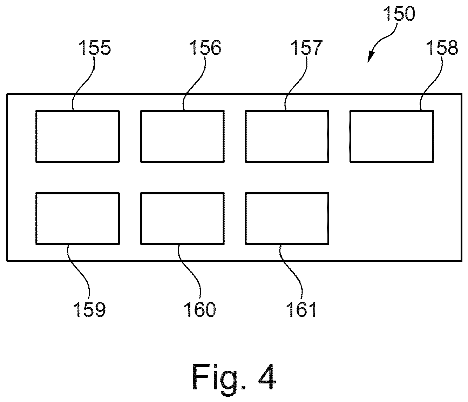

The hardware platform 100 further includes a second execution environment 140, for example a second virtual machine 140, in which a supervisor component 150 for the at least one safety-critical application 130 in the first execution environment 120 is executed. The second execution environment 140 may have its own memory and data storage and may be executed on top of a separate operating system and/or kernel. The supervisor component 150 may include one or more handlers 152 for performing dedicated tasks or functions, as described hereinabove and hereinbelow, and e.g., referred to as functional blocks 155-161 in Figure 4.

The guest OS 125 and/or guest OS kernel 125 may, for example, be a Linux-based kernel. However, any other kernel software may be used for the guest OS. Also, more than two execution environments may be utilized. For instance, a third execution environment and/or virtual machine may be utilized for non-safety-critical applications, such as for providing a network or ethernet connection or corresponding data related thereto.

The functionalities of the supervisor component 150 in conjunction with the first and second execution environments 120, 140 and the safety-critical application 130 is further illustrated in the flowchart of Figure 1, which illustrates a computer-implemented method for executing the safety-critical application 130 on the hardware platform 100.

The method shown in Figure 1 comprises, in step S1, executing, in the first execution environment 120 on the hardware platform 100, the safety-critical application 130.

The method comprises in step S2 executing, in the second execution environment 140 on the hardware platform 100, the supervisor component 150 for the safety-critical application 130.

The method further comprises, in step S3, detecting, by the supervisor component 150, at least a transition of a control flow between the safety-critical application 130 and other software 125 running in the first execution environment. Jointly illustrated by reference numeral 125, the other software 125 can be a guest OS, a guest OS kernel, one or more non-safety-critical applications and/or one or more further safety-critical applications executed in the first execution environment 120.

The method comprises a further step S4a, which includes, in response to detecting that the control flow is transitioning from the safety-critical application 130 to the other software 125, prohibiting, by the supervisor component 150, at least one mode of access to at least one resource used by the safety-critical application 130 and/or capturing a state of at least one resource 132 used by the safety-critical application. The at least one resource 132 can refer to any physical and/or virtual resource provided in the first execution environment 120 to the safety-critical application 130. Examples of such resources are memory pages and/or memory provided to the safety-critical application, but also memory registers, process registers, processor registers or hardware computing resources, such as CPU power, could be controlled or blocked by the supervisor component 150 and/or a hypervisor 115 when detecting a transition from the safety-critical application 130 to the other software 125.

Alternatively or additionally to step S4a, the method comprises a step S4b, which includes, in response to detecting that the control flow is transitioning from the other software 125 back to the safety-critical application 130, allowing access to the at least one resource 132 again and/or verifying whether the state of the at least one resource 132 is compliant with the previously captured state, which may include appropriate or correct updating of the state, and if the state is not compliant, reporting a fault.

As described hereinabove and hereinbelow, the general method illustrated in Figure 1 can be supplemented with one or more optional features, steps, or aspects. Such exemplary steps and aspects, as well as advantages and benefits achieved by the method, are summarized in the following with continued reference to Figures 1 and 2, as well as with reference to Figures 3 and 4.

Therein, Figure 3 shows a block diagram illustrating an exemplary hardware platform 100 and computing system 500 for performing a method for executing a safety-critical application 130. Unless stated otherwise, the hardware platform 100 of Figure 3 comprises the same features and elements as the hardware platform 100 of Figure 2. Figure 4 shows a block diagram of a supervisor component 150 of an exemplary hardware platform 100 and method for executing a safety-critical application 130. The supervisor component 150 of Figure 4 may comprise the same features and functions as the supervisor component 150 described with reference to any of Figures 1 to 3, unless stated otherwise.

The computing system 500 depicted in Figure 3 corresponds to or illustrates the components of an electric/electronic/programmable electronic device (E/E/PE device), for example as used as safety-critical system in vehicles for controlling one or more functions of the vehicle.

The computing system 500 includes a hardware platform 100, which may be considered as control system for the E/E/PE device or computing system 500. The computing system 500 includes a processing circuitry 110 and/or processor 110 with one or more processor cores 112a, 112b, and memory 114 (see Fig. 2).

Optionally, the hardware platform 500 includes a bootloader 111 for configuring the platform 100 during booting. The hardware platform 100 further optionally includes a hypervisor 115, which for example can provide or allow to setup one or more execution environments 120, 140, 190.

In particular, Figure 3 illustrates a first execution environment 120 or main execution environment, which may be comprised in or provided by a first or main virtual machine 120 maintained and/or instantiated by the hypervisor 115. The hypervisor 115 may have a higher privilege level than any of the execution environments 120, 140, 190 shown in Figure 3. The first execution environment 120 may comprise a guest OS or guest OS kernel 125a, optionally using a C-Library 125b to execute one or more safety-critical applications 120 on top of the guest OS kernel 125a.

A second execution environment 140 may be provided for the supervisor component 150 and its one or more handlers 152, 155-161. The second execution environment may be run as dedicated or encapsulated computing environment directly on the hardware platform 100 without virtual machine. For instance, the supervisor component 150 may be integrated into the hypervisor 115. Alternatively, the supervisor component 150 may be executed in a virtual machine that provides the second execution environment 140.

The hardware platform 100 further comprises a third execution environment 190 with a further kernel 192 and/or guest OS 192, optionally running another process 194, such as e.g., a proxy server application.

In the example shown in Figure 3, the third execution environment 190 communicates via one or more (digital) communication interfaces 520a with the external world. For instance, one or more sensor signals can be obtained from one or more sensors 522 communicatively coupled to the one or more communication interfaces 520a. Sensor signals received via the communication interface(s) 520a can be provided to the safety-critical application 130 and/or other components of the hardware platform 100, which can for example be used to generate one or more actuation signals to actuate one or more actuators communicatively and/or operatively coupled to the hardware platform 100 via one or more corresponding communication interfaces 520b.

In the following, various features, functions, and benefits related thereto are described, primarily with reference to Figure 4, which illustrates these features or functions as block diagram with functional blocks 155, 156, 157, 158, 159, 160, and 161. One or more of these functional blocks 155-161 can be inter-combined and/or combined with one or more other functions described herein with reference to the supervisor component 150. Further, each of the functional blocks 155-161 may be associated with or correspond to one or more handlers 152.

Functional block 155 illustrates the features and functions provided by the supervisor component 150 for starting a safety-critical application 130. When a (new) safety-critical process or application 130 is started, the supervisor component 150 is configured to verify whether the binary or binary sections have not been corrupted, and/or integrity of at least a part of a binary comprising machine-readable instructions of the safety-critical application 130.

Further, the supervisor component 150 may verify that a new process context for the safety-critical application 130 has been correctly set up by the guest OS kernel 125a.

Moreover, the supervisor component 150 may verify that the paging tree of the (new) safety-critical application 130 is correct. For instance, it may be determined whether memory elements in the page table tree, PTT, for the safety-critical application 130 have expected sizes and/or are located at expected places. Alternatively, or additionally, it may be determined whether memory pages used by the safety-critical applications 130 do not conflict with address spaces of other software.

For registering a (new) safety-critical process or application 130, the supervisor component 150 may receive a HVC instruction from the hypervisor 115 for the kernel 124a to indicate the intend to start a new process or safety-critical application 130. For example, the hypervisor 115 may be called via an HVC-instruction from the execution environment 120. A handler within the hypervisor 115 may, for example, decide whether to call the supervisor component 150 based on the HVC instruction. Safe application startup or block 155 then can take in the key parameters of the new process or safety-critical application 130 (e.g., a binary path and intended paging tree root) and can creates a new internal data structure for at least one handler, e.g., a common handler (which may also be referred to herein as "MoniLisa" or block 160 of the supervisor component 150) to track the new process or safety-critical application 130. No further checks may be required at this point, and the kernel 125a may be allowed to proceed with the start-up.

For verifying the binary content or sections of the safety-critical application 130, the supervisor component 150 may protect the contents of the binary and/or data against corruption. This can be achieved by observing, monitoring, and/or reporting a fault, by the supervisor component 150 and e.g., by triggering computation of checksums for each segment or section of the binary, for example which may be done in the data structures. These crc32 checksums can be checked against the segments or sections in this feature. The verification can be done on the binary after being loaded to RAM, for example. The checksums for the segments can be stored in an additional section. The binaries can optionally contain an extra flag in the header to indicate that it's a binary that implements a safety-critical application 130. Should the binary be missing either the flag or the section with the segment checksums, a fault can be indicated by the supervisor component 150. Not all binary sections may hold or contain data relevant for proper execution of the safety-critical application 130. As such, not all sections may be check-summed.

To verify the process context, the supervisor component 150 may check that the memory elements (e.g., memory stack) in the user-space PTT have the right size and are located at the correct place. Optionally, some further checks may be performed on the kernel internal data structures for processes, such as task_struct or mm_struct, which may be subject to concluding the software-based technical analysis.

For verifying correctness of the paging tree, the supervisor component 150 may verify the correctness of the PTTs start address. For verifying correctness of the paging tree, it may be checked that no overlap or "clashes" with the address space of the kernel 125a (unless intended for shared memory), or other safety-critical application 130 occurs. The supervisor component 150 may also verify the correctness of the PTTs start address.

The verification of a startup of the safety-critical application 130 can be trapped from exception level 1 at the operating system 125a or kernel 125a, EL 1 OS, to exception level 2 at the hypervisor 115, and from there to the supervisor component 150. Trapping can, for example, be implemented based on the ARM HV-feature (see e.g., ARM Architecture Reference Manual, section G8.2.64) on write to TTBR0_EL1.

Further, if any of such verifications fails, the supervisor component 150 may indicate a fault and/or provide a fault-indication, e.g., via functional block 158.

Functional block 156 illustrates the features and functions provided by the supervisor component 150 to maintain data-integrity of a safety-critical process or application 130. Inter alia, functional block 156 and/or the supervisor component 150 can be configured protect the memory pages utilized by the safety-critical application 130.

In an exemplary implementation of functional block 156, the supervisor component 150 can be configured to modify a page table of high-integrity applications, respectively the safety-critical application 130. For instance, memory pages of the safety-critical application 130 can be marked read-only and optionally no-execute in the last stage of a PTT, for example in the stage-2 PTT and/or stage-2 address space. Block 156 can handle the modifying of the stage-2 PTTs. Alternatively, or additionally, modification of the stage-2 PTTs can be done in the hypervisor 115.

Further, after modifying the stage-2 PTT and/or last stage of a PTT on one of multiple cores 112a, 12b of the processor 110, translation lookaside buffers, TLBs, of other cores are flushed. This can avoid that other cores use cached PTT entries with outdated address mappings or permissions, and could for that reason accidently access or modify, for example write to, memory used by the safety-critical application. To make sure that no potentially inconsistent state can be generated during this process, the supervisor component 150 may first mark the memory page as read-only and no-execute (or non-executable) in the PTT of the guest OS kernel 125a, flush the TLB and then modify the PTT of the safety-critical application 130 and flush TLB again. Multi page modifications following the workflow may be possible as well.

Accordingly, the supervisor component 150 may be configured to maintain page-table entries for safety-critical processes or application 130. In particular, the supervisor component 150 can be configured to maintain stage-2 PTTs for the first execution environment 120.

Further, to maintain data integrity, the supervisor component 150 may be configured to switch stage-2 memory address space. In particular, the supervisor component 150 can be configured to modify the stage-2 PTT when a context switch from the safety-critical application 130 to the other software 125, 125a, 125b and/or vice versa occurs. In particular, the supervisor component 150 can trigger and/or execute the switching of stage-2 PTT and/or memory address space when the context is switched from the kernel 125a or other software 125, 125b to the safety-critical application130 and vice versa. Accordingly, depending on whether the safety-critical application 130 is active on the processor core 112a,b or whether the other software 125, 125a, 125b is active on the processor core 112a,b, the supervisor component 150 may activate and/or load a particular stage-2 PTT for the respective context, thereby ensuring that memory pages allocated or used by the safety-critical application 130 cannot get corrupted during a context switch. However, further sequential page modifications are possible.

Optionally, a memory base register, e.g., the TTBRO (Translation Table Base Register 0) can be set when the kernel 125a or other software 125b, 125 is active on the processor core 112a, 112b. Further, the supervisor component 150 can be configured to handle one or more exceptions triggered by writes to the memory base register, such as a TVM exception in case of ARM-based processors. Similar concepts can be implemented for other processor architectures such as x86.

In case of any fault detected, the supervisor component 150 may indicate a fault and/or provide a fault-indication, e.g., via functional block 158.

Functional block 157 illustrates the features and functions provided by the supervisor component 150 to maintain data-integrity of during context switch. Inter alia, functional block 157 and/or the supervisor component 150 can be configured to capture a state of the safety-critical application130, e.g., when a context switch or transition of the control from the safety-critical application 130 to other software 125, 125a, 125b occurs, and/or for restoring the state when transitioning from the other software 125, 125a, 125b to the safety-critical application 130.

For example, a context switching component or block 157 of the supervisor component 150 may check the state of the safety-critical application's 130 register(s) and/or memory. Also, block 157 may determine whether the memory pages and/or (process/processor) registers are consistent and/or correctly updated on entry and exit of the guest OS kernel 125a or other software 125, 125b.

In particular, functional block 157 and/or the supervisor component 150 can be configured to store the state, e.g., CPU/processor Register state, on context switch to kernel and/or other software 125, 125a, 125b. A copy or shadow copy of relevant process registers or processor registers can be stored on entry to kernel and/or other software 125, 125a, 125b. For instance, context switch triggers can either be scheduling based timer interrupts, or syscall based or other.

Only copies of registers relevant for the safety-critical application 130 may be stored, e.g., only copies of registers that can be written by kernel 125a from EL1 and which may be relevant to compute data within the high-integrity context of the safety-critical application 130.

Further, functional block 157 and/or the supervisor component 150 can be configured to check the state, e.g., CPU Register, on context switch to user-space, for example from kernel 125a to the safety-critical application 130. For instance, the supervisor component 150 can be configured to check the (shadow) copy of the state against restored process/processor registers on return to user-space and/or the safety-critical application 130. Optionally, allowed changes performed by the kernel 125a can be accounted for. E.g., the initial state of a new processes or safety-critical application 130 may be stored when first created in a new data structure.

Allowed changes can originate mostly when starting a new process and/or safety-critical application 130, since the kernel 125a can then be responsible for replacing the cloned processes state with the clean starting state of the new process. Hence a detailed technical analysis can outline which default values are acceptable for a new process. A close collaboration between the safe application startup at block 155 and functional block 157 can be implemented, to ensure the integrity on these context switches. The exact value for the registers can be analyzed in the software technical analysis.

Furthermore, block 157 may be made aware which process or application is being scheduled in, as when scheduling the incoming process is likely not the outgoing process and hence the right shadow copy of the state should be used.

Allowed values for all registers can be determined for different architectures of the processor cores 112a, 112b, which can for example be derived from the ARM or x86 manuals and analyzed in the software technical analysis for potential causes of fault propagation introduced by certain values, such as e.g., caching attributes.

In case of any fault detected, the supervisor component 150 may indicate a fault and/or provide a fault-indication, e.g., via functional block 158.

Functional block 158 of the supervisor component 150 may be configured to provide a heartbeat signal to the hypervisor 115, for example to a watchdog 117 and/or watchdog service 117 of the hypervisor. The functional block 158 can be referred to as canary component 158 of the supervisor component 150.

The canary component 158 can provide an interface to other supervisor software and/or functional blocks of the supervisor component 150 described herein to indicate faults.

Block 158 or canary component 158 may start to indicate heartbeats before start of the very first safety-critical process or application 130. Thus, it may be possible to react onto fault-indications observed throughout startup. In case that any other component of functional block of the supervisor component 150 indicates a fault to the canary component 158, the canary component 158 may stop triggering the watchdog's 117 interface and/or stop providing heartbeat signals to the watchdog 117 of the hypervisor 115.

The supervisor component 150 may further include a functional block 159 that can provide an abstraction layer from the hypervisor 115 used. Block 159 can provide a simple reusable interface to abstract away from a specific hypervisor 115, thereby allowing to use various different hypervisors 115.

The supervisor component 150 may further include a functional block 160 that provides an interface to the hypervisor 115 to start the monitoring tasks from a single-entry point. Furthermore, block 160 can be configured to distribute events and exceptions forwarded from the hypervisor 115 to the individual monitoring components or functional blocks 155-161 of the supervisor component 150, and optionally filter unwanted and/or disallowed events. Functional block can 160 can thus be considered a common handler 160 that interacts with individual handlers 155, 156, 157, 158, 159, and 161 and/or functional blocks 155, 156, 157, 158, 159, and 161 of the supervisor component 150. Block 160 can also be referred to as MoniLisa herein.

To provide an entry point, the hypervisor 115 can call a start-up routine or block 155 before start of the first execution environment 120 or virtual machine 120, e.g., to start monitoring in MoniLisa block 160.

Block 160 can then call into block 159 to enable exception triggering, e.g., to enable the TVM bit, which enables an exception triggering when the kernel 125, 125a, 125b tries to write to the TTBRO and several other registers.

Block 160 can further distribute events and exceptions to various functional blocks 155-161 of the supervisor component 150, as different exceptions and events should be handled by different functional blocks or components 155-161. Some of the block 155-161 may have ordering requirements, which can be handled by component 160 as well.

HVC instruction related events can be distributed as follows:
- store entry for task: store base address of task and/or process within supervisor component;
- process init: set internal state info of process to "starting" and then call into safety-critical application startup or block 155, then into block 157;
- any page table modification: indicate fault if process's internal state is not "starting", else call into block 156
- TVM related TTBRO exception: request setting of TTBRO byblock 156;
- execution permission exception in high integrity stage-2 PTT mapping:
   if syscall is disallowed: indicate fault;
   else: call into block 157 to store registers;
   mark process state internally as sleeping;
   if a child-process is created, mark it as starting;
   call into block 156 to switch stage 2 PTT.
- Returning from an exception to safety-critical process:
   if process is marked as starting, call into safety-critical application startup or block 155 and block 157 to setup initial reference data;
   call into block 157 for register checks;
   call into block 156 for switching of paging tree;
   mark process state internally as running.

Block 160 can filter allowed system calls (referred to as syscalls herein) from the user-space, for example which are allowed in the Safety Manual and/or according to a safety standard or recommendation. If a syscall is called which is not allowed in the supervisor component 150, then a fault can be indicated to block 158.

Block 160 can further hold state information for other elements of block 160 to access and update in a central location. Information examples are: List of processes and their states such as running and starting, references the at least two stage-2 PTTs, one of the safety-critical application 130 and one for the other software 125, 125a, 125b, and other kernel memory address related information, which may be used by safe application startup or block 155 and block 156 to deduce locations within the kernel memory.

In case of any fault detected, the supervisor component 150 may indicate a fault and/or provide a fault-indication, e.g., via functional block 158.

Yet another functional block 161 of the supervisor component 150 can relate to kernel patches. Block 161 can implement events-based communication with functional block 160 and provide shared memory to the safety-critical application 130 or high integrity applications 130.

Shared memory patches or updates may, for example, be provided as follows. The device tree for a guest OS or virtual machine (VM), e.g., a guest Linux VM, may hold several extra shared memory pages. These pages may get mapped into high integrity processes or safety-critical application 130 on start-up, and/or during runtime in a pre-defined layout to enable IPC, watchdog trigger from the users-pace and communication to the low integrity process or VM.

HVC calls may, for example, be utilized as instructions by the kernel 125a to notify block 160 of the intend to perform certain actions relevant to all monitoring features or blocks 155-161 mentioned herein.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. A method for executing a safety-critical application (130) on a hardware platform (100) comprising a processor with multiple processor cores (112a, 112b), the method comprising the steps of:
• executing, in a first execution environment (120) on the hardware platform (100), the safety-critical application (130);
• executing, in a second execution environment (140) on the hardware platform, a supervisor component (150) for the safety-critical application;
• detecting, by the supervisor component (150), at least a transition of a control flow between the safety-critical application (130) and other software (125, 125a, 125b) running in the first execution environment (120), wherein detecting a transition of the control flow comprises instructing, by the supervisor component (150), the processor core (112a, 112b) to: in response to receiving an instruction to perform an action that is associated with the transition of the control flow, diverting the control flow to a handler (155-161) in the supervisor component (150); and:
• in response to detecting that the control flow is transitioning from the safety-critical application (130) to the other software (125, 125a, 125b), prohibiting, by the supervisor component (150), at least one mode of access to at least one resource (114) used by the safety-critical application (130) and/or capturing a state of at least one resource used by the safety-critical application, whereas,
• in response to detecting that the control flow is transitioning from the other software (125, 125a, 125b) back to the safety-critical application (130), allowing access to the at least one resource (114) again and/or verifying whether the state of the at least one resource is compliant with the previously captured state, and if the state is not compliant, reporting a fault,
wherein:
• the at least one resource (114) comprises memory pages used by the safety-critical application (130);
• prohibiting access to the memory pages used by the safety-critical application (130) comprises prohibiting writing to these memory pages and prohibiting execution of code in these memory pages;
• the prohibiting or allowing of access to memory pages comprises:
∘ modifying a stage-2 page table tree, PTT, that is storing actual frame information of the memory, maintained for the first execution environment (120) by the supervisor component (150) and/or a hypervisor and residing outside this first execution environment; and
∘ after modifying the stage-2 PTT on one of the multiple cores (112a, 112b) of a processor (110), flushing the translation lookaside buffers, TLBs, of the other cores (112a, 112b)
• in response to the safety-critical application (130) raising a system call to an operating system (125, 125a, 125b) in the first execution environment (120):
∘ checking whether the system call is on a list of allowed system calls, and
∘ if the system call is on this list, executing the system call, whereas,
∘ if the system call is not on this list, reporting a fault; and
• notifying, by an operating system (125, 125a, 125b) on top of which the safety-critical application (130) runs in the first execution environment (120), the supervisor component (150) of intended actions by means of hypervisor calls, HVC.

2. The method of claim 1, wherein the at least one resource comprises at least one processor register.

3. The method of any one of claims 1 and 2, wherein the executing of the safety-critical application (130) comprises verification of one or more of:
• an integrity of at least a part of a binary comprising machine-readable instructions of the safety-critical application (130); and/or
• whether memory elements in the page table tree, PTT, for the safety-critical application have expected sizes and/or are located at expected places; and
• whether memory pages used by the safety-critical applications do not conflict with usage of other software,
and if any such verification fails, reporting a fault.

4. The method of any one of claims 1 to 3, further comprising:
• instructing, by the supervisor component (150), the processor core (112a, 112b) to: if the control flow is to be diverted from the first execution environment (120) to the supervisor component (150) due to any event, divert the control flow to a common handler (160) in the supervisor component (150);
• distributing, by the common handler (160), according to a predetermined ruleset, the events to individual handler components (155-159, 161) in the supervisor component (150);
• determining, by each individual handler component, whether the event is expected or unexpected in the course of normal operation; and
• if the event is expected in the course of normal operation, executing a predetermined handling operation associated with the event, whereas,
• if the event is unexpected, reporting a fault.

5. The method of any one of the preceding claims, wherein the intended actions comprise one or both of:
• starting a process, and
• allocating memory pages to a process.

6. The method of any one of claims 1 to 5, wherein
• the first execution environment (120) is a virtual machine that is instantiated by a hypervisor (115) running on a higher privilege level than the virtual machine;
• the hypervisor (115) comprises a watchdog (117) that is configured to be regularly triggered with heartbeat signals indicating normal operation of the safety-critical application (130); and
• in response to the heartbeat signals ceasing, the hypervisor (115) determines that the safety-critical application (130) is faulty, and optionally initiates remedial action to restore a working state of the safety-critical application.

7. The method of claim 6, wherein
• at least one canary component (158) provides heartbeat signals to the watchdog (117) of the hypervisor (115) and is configured to receive health indications and/or reported faults; and
• in response to receiving a bad health indication, and/or a reported fault, the canary component ceases to provide the heartbeat signals.

8. The method of any one of claims 1 to 7, further comprising:
• processing, by the safety-critical application (130), measurement data acquired by at least one sensor (522) into an actuation signal; and
• actuating at least one land, air or sea vehicle, and/or at least one robot, and/or any component (524) thereof, with the actuation signal.

9. A computing system (500), comprising:
a hardware platform (100) with one or more processor cores (112a, 112b); and
a memory (114) for data storage;
wherein the computing system (500) is configured to perform steps of the method according to any one of the preceding claims.

10. One or more computer programs, comprising machine-readable instructions that, when executed by a computing system, cause the computing system to perform the method of any one of claims 1 to 8, and/or to perform the role of the supervisor component in the context of this method.

11. A non-transitory machine-readable data carrier and/or a download product with the one or more computer programs of claim 10.
